(19) Europäisches Patentamt
European Patent Office
Office européen des brevets

(11) Veröffentlichungsnummer: **0 103 669**
**A1**

(12) # EUROPÄISCHE PATENTANMELDUNG

(21) Anmeldenummer: **83103508.4**

(22) Anmeldetag: **10.05.83**

(51) Int. Cl.³: **A 01 K 5/02**

(30) Priorität: **13.08.82 DE 3230138**

(43) Veröffentlichungstag der Anmeldung:
**28.03.84 Patentblatt 84/13**

(84) Benannte Vertragsstaaten:
**AT BE CH IT LI LU NL SE**

(71) Anmelder: **ALFA-LAVAL AGRAR GMBH**
**Wilhelm-Bergner-Strasse 2**
**D-2056 Glinde bei Hamburg(DE)**

(72) Erfinder: **Dayagi, Yigal**
**Börnsener Weg 80**
**D-2055 Wohltorf(DE)**

(72) Erfinder: **Bruns, Peter, Dr.**
**Am Heesen 26 a**
**D-2050 Hamburg 80(DE)**

(72) Erfinder: **Claussen, Gerd**
**Bauerberg 25**
**D-2000 Hamburg 74(DE)**

(74) Vertreter: **Heldt, Gert, Dr. Dipl.-Ing.**
**Neuer Wall 57 IV**
**D-2000 Hamburg 36(DE)**

(54) **Fütterungsvorrichtung.**

(57) Bei einer Fütterungsvorrichtung mit einem Futterbehälter (1), der an einer Vielzahl von aufgestallten Tieren entlang verfahren wird und aus dem Futter durch eine Zuführung in eine mit ihnen verbundene Futterschale (2) zugeteilt wird, ist zwischen der Futterschale und dem Futterbehälter eine den Kontakt zum Tier bei Bewegungen lösende Verbindung vorgesehen. Die Befestigung ist als eine Verbindung ausgebildet, in der die Futterschale schwenkbar gelagert ist. Die Verbindung besteht aus mindestens zwei Verbindern (7,8), von denen der eine im Verlaufe einer Schwenkachse der Futterschale und der andere in einer quer zur Schwenkachse verlaufenden Ebene an der Futterschale befestigt sind.

3
4
5
1
21
13
22
24
8
7
12
23
20
17
2
18
25
14

Fig. 1

EP 0 103 669 A1

# F ü t t e r u n g s v o r r i c h t u n g

Die Erfindung betrifft eine Fütterungsvorrichtung mit einem Futterbehälter, der an einer Vielzahl von aufgestallten Tieren entlang verfahren wird und aus dem Futter durch eine Zuführung in eine mit ihm verbundene Futterschale zugeteilt wird.

Derartige Fütterungsvorrichtungen haben sich im Blick auf die Mechanisierung der Tierfütterung, insbesondere der Kuhhaltung gut bewährt. Sie fährt beispielsweise an einer Reihe aufgestallter Kühe entlang und teilt jeder Kuh die ihr zugedachte Futtermenge zu. Die Kühe haben die Funktion der Fütterungsvorrichtung sehr schnell erkannt und wissen, daß ihnen in der Futterschale das von ihnen sehr begehrte Futter zugeteilt wird. Sie lernen insbesondere, daß die Fütterungsvorrichtung noch geringe Futterrestmengen austeilt, wenn sie stark geschüttelt wird. Beim Schütteln rieseln restliche Futtermengen, die sich in Zuführungen oder Verschlüssen festgesetzt haben, in die Futterschale, auch nachdem die eigentliche Futterzuteilung bereits beendet ist. Um dieses Nachrieseln von Futter zu beschleunigen bzw. in Gang zu setzen, schütteln die Kühe mit ihren in die Futterschale hineingesenkten Köpfen die Futterschale und damit die gesamte Fütterungsvorrichtung. Durch Drehung des Kopfes und Bewegungen des Kopfes in Richtung der Längsachse der aufgestallten Kuh werden Kräfte in die Futterschale eingeleitet, die als Drehmomente von der Fütterungsvorrichtung aufgenommen werden müssen. Diese Drehmomente sind sehr groß, da die Kühe über eine sehr starke Muskulatur zum Halten und Bewegen ihres Kopfes verfügen. Diese relativ großen Kräfte wirken darüberhinaus auch noch über einen langen Hebelarm auf den Futterbehälter und seine Aufhängung ein. Dieser lange Hebelarm wird von einer starren Verbindung gebildet,

die sich zwischen der Futterschale und dem Futterbehälter erstreckt und der Aufhängung der Futterschale einerseits und der Zuführung des Futters in die Futterschale andererseits dient. Diese Zuführung kann als ein starres Rohr ausgebildet sein, an dessen dem Futterbehälter abgewandten Ende die Futterschale befestigt ist.

Um die durch die Kühe verursachten Schäden an der Fütterungsvorrichtung möglichst klein zu halten, ist versucht worden, den Futterbehälter elastisch auf einer Schienenbahn zu lagern, auf der er an den aufgestallten Kühen entlang transportiert wird. Diese elastische Lagerung muß aber angesichts der erheblichen Länge, die die Fütterungsvorrichtung vom Futterbehälter bis zur Schale aufweist, mit relativ kräftigen Bauelementen hergestellt werden. Sie ist daher teuer sowohl in der Herstellung als auch in der Montage, da die einzelnen Teile der Führung gut ineinander gepaßt werden müssen.

Schließlich werden die aus der Futterschale fressenden Kühe möglicherweise dadurch gefährdet, daß sie vor der Weiterfahrt des Futterbehälters ihren Kopf nicht rechtzeitig aus der Futterschale herausnehmen. Dadurch kann sich der Kopf einer Kuh in der anfahrenden Futterschale festklemmen.

Aufgabe der vorliegenden Erfindung ist es daher, die Fütterungsvorrichtung der einleitend genannten Art so zu verbessern, daß sie durch die von den Kühen hervorgerufene Schüttelbewegung nicht beschädigt werden und ein in die Futterschale hineinragender Tierkopf durch die anfahrende Fütterungsvorrichtung nicht gefährdet wird.

Diese Aufgabe wird erfindungsgemäß dadurch gelöst, daß zwischen der Futterschale und dem Futterbehälter eine den Kontakt zum Tier bei Bewegungen lösende Verbindung vorgesehen ist.

Diese Verbindung ermöglicht die Abkopplung eines in die Futterschale hineinragenden Tierkopfes, ohne daß die Gefahr besteht, daß von diesem Tierkopf auf den Futterbehälter Kräfte ausgeübt werden, die den Futterbehälter bzw. seine Lagerung auf der Schienenbahn beschädigen könnten. Auf diese Weise wird der Futterbehälter vom Tier abgekoppelt, so daß das Tier weder die ihm zugedachten Futterzuteilungen beeinflussen noch daß es versorgende Geräte zerstören könnte. Einerseits teilen sich die vom Tierkopf in die Futterschale eingeleiteten Bewegungen dem Futterbehälter nicht mit. Andererseits ist dafür Sorge getragen, daß der Tierkopf von der Futterschale abgekoppelt wird, bevor die Gefahr besteht, daß er durch Bewegungen des Futterbehälters verletzt wird.

Gemäß einer bevorzugten Ausführungsform der Erfindung ist die Befestigung als eine Verbindung ausgebildet, in der die Futterschale schwenkbar gelagert ist.

Durch diese schwenkbare Aufhängung der Futterschale ist es möglich, die Futterschale aus dem Einflußbereich des Tierkopfes wegzuschwenken. Dabei spielt die Richtung der Schwenkbewegung keine Rolle. Entscheidend ist, daß die Futterschale so bewegt wird, daß eine Kopplung zwischen ihr und dem Tierkopf zwangsweise aufgelöst wird. Gleichzeitig hat das Verschwenken der Futterschale den Vorteil, daß restliche Futtermengen, die sich möglicherweise am Ende einer vorgegebenen Fütterungszeit in der Futterschale befinden, aus der Futterschale herausrieseln und auf einen sich vor dem Tierkopf erstreckenden Boden fallen. Dort können sie von dem Tier aufgenommen werden, so daß das Tier kein Interesse hat, den Kopf länger als bis zu dem Augenblick des Schwenkens in der Futterschale zu halten. Durch diese zusätzliche Maßnahme wird die Entkopplung des Tierkopfes aus der Futterschale sichergestellt, so daß einerseits mit festen Fütterungszeiten für jedes Tier unabhängig von der Geschwindigkeit der Futteraufnahme gerechnet werden kann und andererseits nicht die Gefahr besteht, daß der Tierkopf sich noch in der Futterschale befindet, wenn die Fütterungsvorrichtung ihre Weiterfahrt beginnt. Diese Möglichkeit der Entkopplung zwischen Tierkopf einerseits und Futterschale andererseits kann an einer die Futterschale starr mit dem Futterbehälter verbindenden Befestigung vorgesehen sein.

Gemäß einer weiteren bevorzugten Ausführungsform der Erfindung ist jedoch die Verbindung als ein lediglich Zugkräfte übertragender Verbinder ausgebildet.

Die starre Verbindung wird dadurch zugunsten einer den eingeleiteten Horizontalkräften nachgebenden Verbindung zwischen der Futterschale und dem Futterbehälter aufgehoben. Die von den Tieren in die Futterschale eingeleiteten Horizontalkräfte teilen sich dem Futterbehälter nicht mit. Der zwischen der Krafteinleitung und der Lagerung der Fütterungsvorrichtung bisher bestehende lange Hebelarm ist aufgelöst. Die von den Tieren in die Fütterungsvorrichtung eingeleiteten Kräfte können ihre Wirkung lediglich im Bereich der Futterschale entfalten. Durch die Aufhebung der starren Verbindung kann sich darüber hinaus die Futterschale der jeweiligen Haltung des Tierkopfes anpassen, so daß der Tierkopf auch dann aus der Futterschale herausgleitet, wenn die Fütterungsvorrichtung ihre Weiterfahrt in Richtung auf das nächste Tier antritt. Ein Festklemmen des Tierkopfes in der Futterschale wird dadurch unmöglich. Querkräfte kann ein solcher Verbinder von der Futterschale auf den Futterbehälter nicht übertragen. Dadurch können lediglich Zugkräfte in die Futterschale eingeleitet werden, die von der Lagerung des Futterbehälters auf eine Schienenbahn leicht übertragen werden können, ohne daß die Gefahr von Beschädigungen des Futterbehälters bzw. der Schienenbahn besteht.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

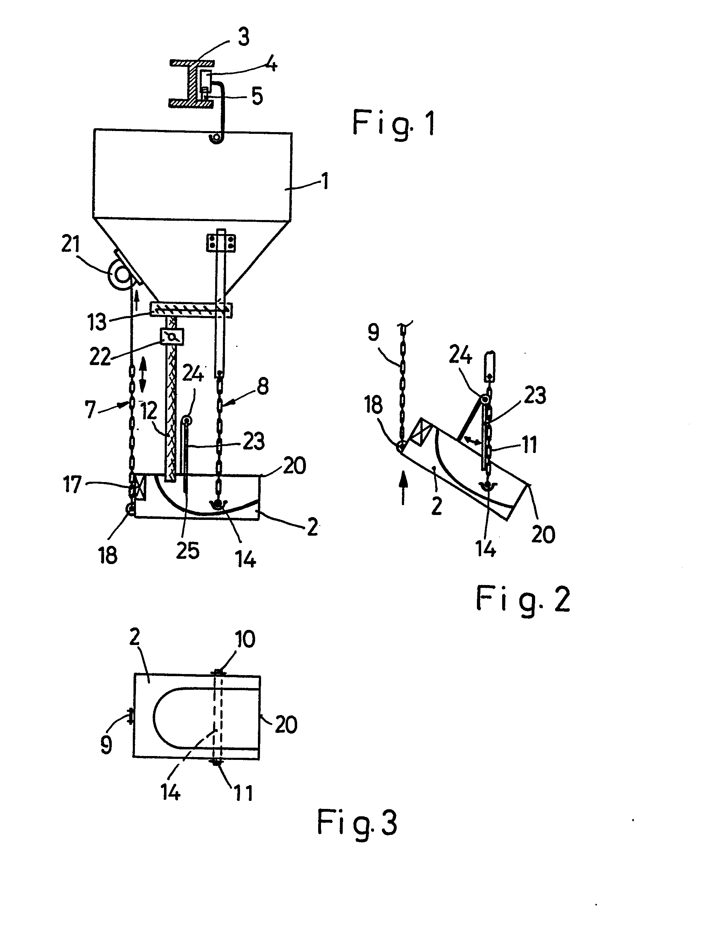

Fig. 1 Eine Seitenansicht einer an einer Schienenbahn geführten Fütterungsvorrichtung,

Fig. 2 eine Seitenansicht einer verschwenkten Futterschale,

Fig. 3 eine Draufsicht auf eine Futterschale,

Fig. 4 eine Seitenansicht einer anderen Fütterungsvorrichtung und

Fig. 5 eine Seitenansicht einer weiteren Fütterungsvorrichtung.

Eine Fütterungsvorrichtung besteht im wesentlichen aus einem Futterbehälter 1, einer Futterschale 2 sowie einer Schienenbahn 3. Der Futterbehälter 1 ist auf der Schienenbahn 3 über eine Verfahrvorrichtung 4 gelagert, die sich über Räder 5 auf der Schienenbahn 3 abstützt.

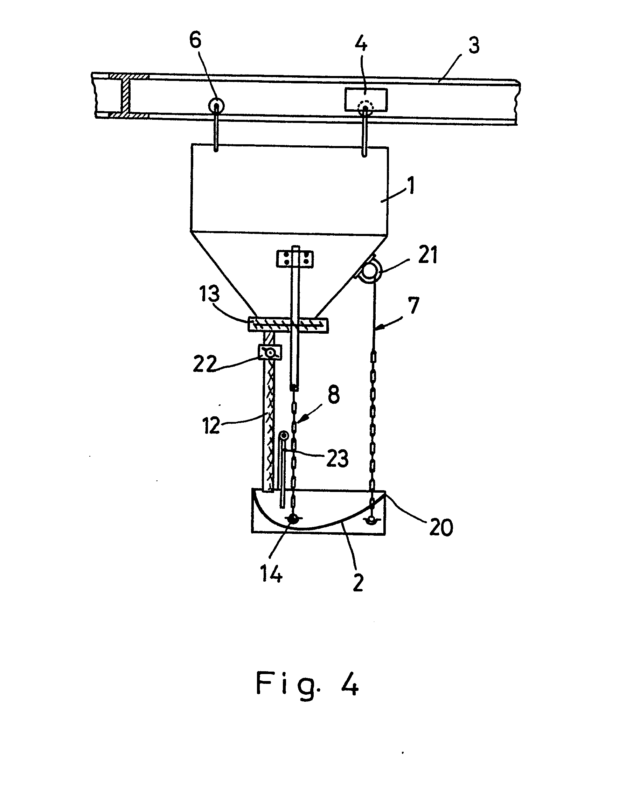

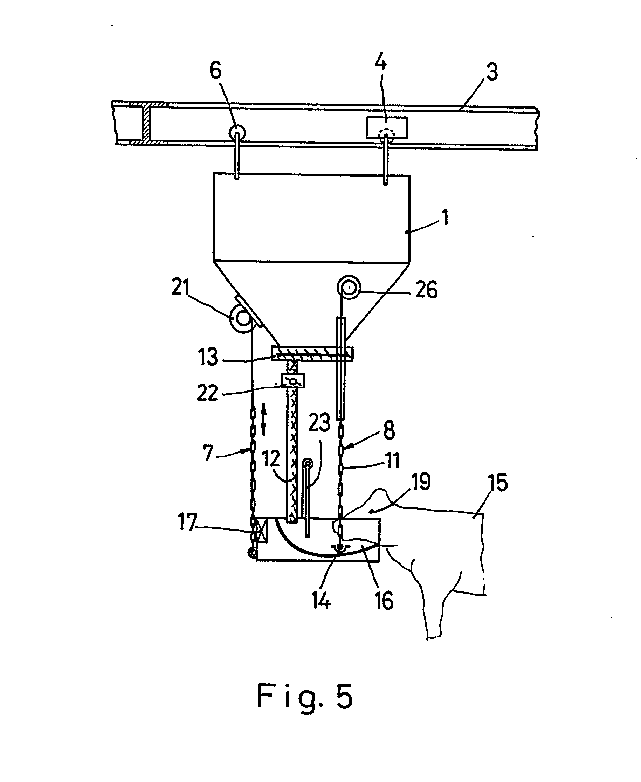

Darüber hinaus ist auf der Schienenbahn 3 eine Laufkatze 6 gelagert, die den Futterbehälter 1 führt. Diese Laufkatze 6 ist insbesondere in den Fig. 4 und 5 zu erkennen, in denen die Schienenbahn 3 um einen Winkel von 90° gedreht gegenüber dem Futterbehälter 1 dargestellt ist.

Die Futterschale 2 hängt über Verbinder 7, 8 am Futterbehälter 1. Diese Verbinder 7, 8 können Horizontalkräfte, die in die Futterschale 2 eingeleitet werden, auf den Futterbehälter 1 nicht übertragen. Sie sind beispielsweise als Ketten 9, 10, 11 ausgebildet, die lediglich Zugkräfte von der Futterschale 2 auf den Futterbehälter 1 übertragen können. Demgegenüber geben sie solchen Querkräften nach, die in horizontaler Richtung in die Futterschale 2 eingeleitet werden.

Darüber hinaus erstreckt sich zwischen dem Futterbehälter 1 und der Futterschale 2 ein Futterabwurfschacht 12, durch den Futter aus dem Futterbehälter 1 in die Futterschale 2 transportiert werden kann. Dieser Futterabwurfschacht 12 ist elastisch ausgebildet und kann beispielsweise als ein Schlauch gestaltet sein. Dieser mündet mit seinem dem Futterbehälter 1 zugewandten oberen Ende in einen Futterzuteiler 13, der in Richtung auf die Futterschale 2 unterhalb des Futterbehälters 1 befestigt ist. Mit seinem anderen Ende mündet der Futterabwurfschacht 12 in der Futterschale 2.

Die drei Ketten 9, 10, 11 bilden eine Dreipunktaufhängung für die Futterschale 2. Zwei dieser Ketten sind an einer Schwenkachse 14 befestigt, die in einem einer fressenden Kuh 15 zugewandten vorderen Teil 16 der Futterschale 2 befestigt ist. Demgegenüber ist die dritte Kette 9 an einem der Kuh 15 abgewandten hinteren Ende 17 an einem Drehpunkt 18 befestigt. Der gradlinige Abstand zwischen dem Drehpunkt 18 und der Schwenkachse 14 ist so bemessen, daß er länger als die Hälfte der gesamten sich von dem Drehpunkt 18 bis zur Kuh 15 erstreckenden Breite der Futterschale 2 ist. Auf diese Weise ist dafür Sorge getragen, daß die Futterschale 2 nicht schon dann eine Schwenkbewegung um die Schwenkachse 14 ausführt, wenn die Kuh 15 ihren Kopf 19 auf die ihr zugewandte Kante 20 der Futterschale 2 auflegt. Je größer das Gewicht des Kopfes 19 ist, um so weiter muß die Schwenkachse 14 in Richtung auf die Kante 20 ge-rückt werden.

Die Kette 9 ist über eine Hubeinrichtung 21 an den Futterbehälter 1 angekoppelt. Mit Hilfe dieser Hubeinrichtung 21 ist es möglich, das hintere Ende 17 der Futterschale 2 in Richtung auf den Futterbehälter anzuheben bzw. in entgegengesetzter Richtung zu senken. Dabei führt die Futterschale 2 Schwenkbewegungen um die Schwenkachse 14 aus. Die Hubeinrichtung 21 kann als ein Stillstandsmotor ausgebildet sein, der im Stillstand die Kette 9 genau in einer von einem Bediener gewünschten Hublage festhält.

Der Futterzuteiler 13 ist mit dem Futterabwurfschacht 12 über eine Absperrklappe 22 verbunden, die nach der Futterzuteilung die Verbindung zwischen dem Futterzuteiler 13 und dem Futterabwurfschacht 12 fest verschließt. Auf diese Weise ist gewährleistet, daß auch durch starkes Schütteln der Futterschale 2 kein Futter aus dem Futterzuteiler 13 nachträglich in den Futterabwurfschacht 12 eintreten kann. Darüber hinaus ist der Futterabwurfschacht 12 im Bereich seiner Einmündung in die Futterschale 2 von dieser entkoppelt, so daß Schüttelbewegungen in den Futterabwurfschacht 12 nicht übertragen werden können.

In Richtung der Kuh 15 befindet sich vor dem Futterabwurfschacht 12 ein Schutzschild 23. Dieser verhindert, daß die Kuh 15 beispielsweise mit ihrer Zunge den Futterabwurfschacht 12 berühren und damit beschädigen kann. Dieser Schutzschild ist im Bereich seines der Futterschale 2 abgewandten oberen Endes 24 verschwenkbar gelagert. Diese Anordnung des Schutzschildes 23 ermöglicht sein Verschwenken um sein oberes Ende 24, so daß er unabhängig von der jeweiligen Schwenklage der Futterschale 2 ständig in vertikaler Richtung hängt. Beim Verschwenken um sein oberes Ende 24 führt sein entgegengesetztes Ende 25 eine auf einem Kreisbogen verlaufende Bewegung in Richtung auf die Kante 20 der Futterschale 2 aus und treibt auf diese Weise den Kopf der Kuh 15 auf sanfte, aber sehr bestimmte Art aus der Futterschale 2 heraus.

Die Fütterungsvorrichtung wird mit Hilfe der Verfahrvorrichtung 4 zu einer Kuh 15 gefahren. Entsprechend den jeweiligen Bedürfnissen dieser Kuh 15 teilt der Futterzuteiler 13 aus dem Futterbehälter 1 Futter durch den Futterabwurfschacht 12 der Futterschale 2 zu. Dabei ist die Futterabsperrklappe 22 geöffnet. Die Kuh 15 streckt ihren Kopf in die Futterschale 2 hinein, um das durch den Futterabwurfschacht 12 in die Futterschale 2 gelangende Futter aufzunehmen. Dabei legt die Kuh ihren Kopf auf die Kante 20 auf. Ein Verschwenken der Futterschale 2 um die Schwenkachse 14 wird dadurch verhindert, daß die Schwenkachse 14 nicht durch den Schwerpunkt der Futterschale 2 verläuft, sondern in Richtung auf die Kuh 15 gegenüber dem Schwerpunkt versetzt ist.

Nachdem die Kuh 15 den wesentlichen Teil des ihr zugeteilten Futters aufgenommen hat bzw. nach einer für jede Kuh 15 vorbestimmten Fütterungszeit wird der Futterbehälter 1 in Richtung auf eine nächste Kuh weitertransportiert. Sollte die Kuh 15 ihren Kopf noch in der Futterschale 2 hälten, so dreht sich die Futterschale 2 wegen ihrer elastischen Aufhängung in eine der jeweiligen Haltung des Kuhkopfes entsprechende Stellung, so daß der Kuhkopf aus der Futterschale 2 herausgleiten muß.

Darüber hinaus ist es möglich, am Ende der jeder Kuh 15 zugedachten Fütterungszeit die Hubeinrichtung 21 zu betätigen, so daß die Futterschale 2 um die Schwenkachse 14 verschwenkt wird. Durch diesen Schwenkvorgang gleitet der Kuhkopf aus der Futterschale 2 heraus. Anschließend wird die Verfahrvorrichtung 4 betätigt, so daß der Futterbehälter 1 zur nächsten Kuh 15 fährt. Durch das Verschwenken der Futterschale 2 wird gleichzeitig ein Rest des sich in der Futterschale 2 befindlichen Futters aus der Futterschale 2 entleert und rieselt in einen vor der Kuh 15 liegenden Bereich des Stallbodens. Die Kuh wendet sich diesem Futterrest zu, so daß die Futterschale 2 vor ihr unbehelligt die Weiterfahrt antreten kann.

Darüber hinaus löst sich der Schutzschild 23 aus seiner parallel zum Futterabwurfschacht 12 verlaufenden Ruhelage und verschwenkt um sein oberes Ende 24, wenn die Futterschale 2 eine Schwenkbewegung um die Schwenkachse 14 durchführt. Der massiv ausgebildete Schutzschild 23 schiebt auf diese Weise den Kuhkopf aus der sich unter dem Schutzschild 23 wegschwenkenden Futterschale 2 heraus.

Darüber hinaus ist es auch möglich, den Schutzschild 23 an seinem unteren Ende 25 im Bereich der Futterschale 2 schwenkbar zu lagern. Durch Verschwenken der Futterschale 2 erhält der Schutzschild 23 einen auslösenden Impuls, so daß er mit seinem oberen Ende 24 in Richtung auf den sich noch in der Futterschale 2 befindlichen Kuhkopf fällt.

Darüber hinaus ist es möglich, die Futterschale 2 in anderer Weise mit dem Futterbehälter 1 zu koppeln. Beispielsweise kann der zur Ausführung von Hubbewegungen geeignete Verbinder 7 mit der der Kuh 15 zugewandten Kante 20 der Futterschale 2 in Verbindung stehen. Durch diese Anlenkung in einem der Kuh 15 zugewandten vorderen Bereich der Futterschale 2 ist gewährleistet, daß die Futterschale 2 auch bei großer Belastung keine ungewollte Schwenkbewegung um die Schwenkachse 14 durchführt. Insbesondere ist an den Fall zu denken, daß mehrere Kühe sich um den Inhalt der Futterschale 2 streiten, so daß mehrere Kuhköpfe den vorderen Teil der Futterschale 2 belasten. In diesem Falle ist durch die im vorderen Bereich der Futterschale 2 befestigte Kette, die auch als Seil oder Band ausgebildet sein kann, gewährleistet, daß die Futterschale 2 in der gewünschten Lage verharrt. Erst nach Beendigung der Freßzeit wird die Hubeinrichtung 21 betätigt, so daß nunmehr eine Absenkung der Futterschale 2 in Richtung auf die Kuh 15 mit ihrer Vorderkante 20 stattfindet.

Darüber hinaus ist es denkbar, daß die Futterschale 2 auch andere Kipp-/Schwenkbewegungen ausführt. So ist es beispielsweise denkbar, daß auch mindestens ein an der Schwenkachse 14 befestigter Verbinder 8 mit einem Hubantrieb 26 ausgerüstet ist. Durch gleichzeitiges bzw. verschiedenes Schalten der Hubeinrichtung 21 einerseits bzw. des Hubantriebes 26 andererseits kann die Futterschale alle beliebigen Schwenk-/Kippbewegungen ausführen. Im Regelfall wird es ausreichend sein, nur eine der beiden Ketten 10, 11 mit einem Hubantrieb 26 auszustatten. Durch gleichzeitiges Anheben des hinteren Ende 17 und Absenken mindestens einer Kette 11 kippt die Futterschale um eine schräg zur Schwenkachse 14 verlaufende Achse, so daß der Kuhkopf 19 ohne Schwierigkeiten aus der Futterschale 2 herausgleitet. Dabei ist zu gewährleisten, daß die Anlenkungen der Ketten 10, 11 das Herausgleiten des Kopfes 19 nicht behindern. Auf diese Voraussetzung muß auch geachtet werden, wenn der die Hubbewegungen ausführende Verbinder 7 im vorderen Teil 16 der Futterschale 2 angelenkt wird. Zweckmäßigerweise wird in diesem Falle der Verbinder 7 außerhalb der Mitte in Richtung des für den Futterbehälter 1 vorgesehenen Vorschubes angeordnet wird.

Schließlich ist es denkbar, die Futterschale 2 an einem starren Verbinder anzuordnen, der sich zwischen der Futterschale 2 und dem Futterbehälter 1 erstreckt. In diesem Falle wird der Tierkopf von der Futterschale 2 entkoppelt, bevor das Tier die Fütterungsvorrichtung beschädigen kann. Durch Kippen bzw. Schwenken der Futterschale 2 gleitet der Tierkopf aus der Futterschale 2 heraus, bevor das Tier 15 versucht, durch Schwenken oder Stoßen der Fütterungsvorrichtung diese zur weiteren Hergabe von Futter zu veranlassen. In diesem Sinne kann die Futterschale 2 bereits zu einem Zeitpunkt verschwenkt werden, bevor sie vom Tier 15 völlig entleert worden ist. Jedem Tier 15 wird eine bestimmte Freßzeit zugestanden, die sich möglichst an der kürzesten Freßzeit orientieren sollte. Auf diese Weise lassen die Tiere 15 ihre Köpfe nicht länger als unbedingt notwendig in der Futterschale 2, so daß sie nicht genügend Zeit haben, um außer der Aufnahme des Futters auch noch Beschädigungen an der Fütterungsvorrichtung hervorrufen zu können.

Es ist auch möglich, die mit der Schwenkachse 14 verbundenen Verbinder 8 aus einem starren und einem elastischen Teil zusammen-zu-setzen. Dabei befindet sich der elastische Teil zweckmäßigerweise an einem der Futterschale 2 zugewandten unteren Teil des mit dem Futterbehälter verbundenen starren Teils. Auf diese Weise kann die Länge des elastischen Teils eines Verbinders 8 so bestimmt werden, daß die Futterschale 2 vorbestimmte Schwingungen ausführt, wenn sie von dem Tier 15 ausgelenkt wird. Je kürzer der elastische Teil des Verbinders ist, umso kleiner sind die Amplituden der Schwingungen und umso höher ist gleichzeitig die Frequenz. Durch diese Bewegungen wird die Kuh 15 davon abgehalten, die Futterschale 2 in starke Bewegungen zu versetzen, da die schnell zurückpendelnde Futterschale 2 kurzhubige Schwingungsbewegungen ausführt, die einen für die Kuh 15 unangenehmen Schmerz erzeugen kann.

Darüber hinaus kann mit Hilfe elektrischer Spannung versucht werden, die Kühe 15 davon abzuhalten, die Fütterungsvorrichtung nach Zuteilung des Futters durch rauhe Behandlung zu beschädigen. Zu diesem Zwecke werden Teile der Fütterungsvorrichtung unter Spannung gesetzt. Beispielsweise ist es denkbar, den Futterbehälter 1 gegenüber den Verbindern 7, 8 zu isolieren und unter Spannung zu setzen. Auf diese Weise wird verhindert, daß die Kühe durch Stöße gegen den Futterbehälter 1 versuchen, diesen zur Abgabe von weiteren Futtermengen zu bewegen. Es ist aber auch denkbar, nur die Futterschale 2 gegenüber der übrigen Fütterungsvorrichtung zu isolieren. In diesem Falle stehen auch die Verbinder 7, 8 so wie der Futterabwurfschacht 12 unter Spannung, so daß auf diese Weise die Tiere 15 davon abgehalten werden, an den Verbindern 7, 8 Beschädigungen hervorzurufen. Sie werden ihre Bewegungen auf die Futterschale 2 begrenzen. Als Spannung kommt eine Dauerspannung in Betracht. Es ist jedoch auch möglich, die mit Weidezäunen gesammelten Erfahrungen zu verwenden und eine zeitlich gesteuerte alternierende Spannung an die vorgesehenen Teile der Fütterungsvorrichtung zu legen.

Patentansprüche:

1. Fütterungsvorrichtung mit einem Futterbehälter, der an einer Vielzahl von aufgestallten Tieren entlang verfahren wird und aus dem Futter durch eine Zuführung in eine mit ihnen verbundene Futterschale zugeteilt wird, dadurch gekennzeichnet, daß zwischen der Futterschale (2) und dem Futterbehälter (1) eine den Kontakt zum Tier (15) bei Bewegungen lösende Verbindung vorgesehen ist.

2. Fütterungsvorrichtung nach Anspruch 1, dadurch gekennzeichnet, daß die Befestigung als eine Verbindung ausgebildet ist, in der die Futterschale (2) schwenkbar gelagert ist.

3. Fütterungsvorrichtung nach Anspruch 1 und 2, dadurch gekennzeichnet, daß die Verbindung aus mindestens zwei Verbindern (7, 8) besteht, von denen der eine im Verlaufe einer Schwenkachse (14) der Futterschale (2) und der andere in einer quer zur Schwenkachse (14) verlaufenden Ebene an der Futterschale (2) befestigt sind.

4. Fütterungsvorrichtung nach Anspruch 1 bis 3, dadurch gekennzeichnet, daß ein Verbinder (7, 8) in einer Mittelebene der Futterschale (2) an die Schwenkachse (14) angekoppelt ist.

5. Fütterungsvorrichtung nach Anspruch 1 bis 4, dadurch gekennzeichnet, daß je ein Verbinder (8) an zwei einander gegenüberliegenden Enden der sich durch die Futterschale (2) erstreckenden Schwenkachse (14) befestigt sind und ein dritter Verbinder (7) an einem Angriffspunkt angekoppelt ist, der auf einer sich zwischen den Enden erstreckenden Mittelebene angeordnet ist.

6. Fütterungsvorrichtung nach Anspruch 1 bis 5, dadurch gekennzeichnet, daß der Angriffspunkt an einem von den Tieren abgewandten hinteren Ende (17) der Futterschale (2) angeordnet ist.

7. Fütterungsvorrichtung nach Anspruch 1 bis 5, dadurch gekennzeichnet, daß der Angriffspunkt an einem den Tieren zugewandten vorderen Teil (16) der Futterschale (2) angeordnet ist.

8. Fütterungsvorrichtung nach Anspruch 1 bis 5, dadurch gekennzeichnet, daß der Angriffspunkt in Fahrtrichtung des Futterbehälters (1) vorne liegt und die Schwenkachse quer zur Fahrtrichtung angeordnet ist.

9. Fütterungsvorrichtung nach Anspruch 1 bis 5, dadurch gekennzeichnet, daß der Angriffspunkt in Fahrtrichtung des Futterbehälters (1) hinten liegt und die Schwenkachse quer zur Fahrtrichtung angeordnet ist.

10. Fütterungsvorrichtung nach Anspruch 1 bis 9, dadurch gekennzeichnet, daß die Verbindung als mindestens ein in die Futterschale (2) eingeleitete Drehmomente von dem Futterbehälter (1) abkoppelnder Verbinder (7, 8) ausgebildet ist.

11. Fütterungsvorrichtung nach Anspruch 1 bis 10, dadurch gekennzeichnet, daß die Verbindung als ein lediglich Zugkräfte übertragender Verbinder (7, 8) ausgebildet ist.

12. Fütterungsvorrichtung nach Anspruch 1 bis 11, dadurch gekennzeichnet, daß der Verbinder (7, 8) eine Kette (9, 10, 11) ist.

13. Fütterungsvorrichtung nach Anspruch 1 bis 12, dadurch gekennzeichnet, daß der Verbinder (7, 8) ein Seil ist.

14. Fütterungsvorrichtung nach Anspruch 1 bis 13, dadurch gekennzeichnet, daß der Verbinder (7, 8) ein Band ist.

15. Fütterungsvorrichtung nach Anspruch 1 bis 14, dadurch gekennzeichnet, daß der an den Angriffspunkt angekoppelte Verbinder (7) in seiner Länge veränderlich ist.

16. Fütterungsvorrichtung nach Anspruch 1 bis 15, dadurch gekennzeichnet, daß der an den Angriffspunkt angekoppelte Verbinder (7) mit einer ihn aufwickelnden Hubeinrichtung (21) in Verbindung steht.

17. Fütterungsvorrichtung nach Anspruch 1 bis 16, dadurch gekennzeichnet, daß die Hubeinrichtung (21) an dem Futterbehälter (1) befestigt ist.

18. Fütterungsvorrichtung nach Anspruch 1 bis 17, dadurch gekennzeichnet, daß mindestens einer der an die Schwenkachse (14) angekoppelten Verbinder (8) in seiner Länge veränderlich ist.

19. Fütterungsvorrichtung nach Anspruch 1 bis 18, dadurch gekennzeichnet, daß mindestens einer der an die Schwenkachse (14) angekoppelten Verbinder (8) mit einer ihn aufwickelnden Hubeinrichtung in Verbindung steht.

20. Fütterungsvorrichtung nach Anspruch 1 bis 19, dadurch gekennzeichnet, daß zwischen dem Futterbehälter (1) und der Futterschale (2) eine mindestens auf Teilstücken flexible Futterleitung angeordnet ist.

21. Fütterungsvorrichtung nach Anspruch 1 bis 20, dadurch gekennzeichnet, daß als flexible Futterleitung ein in den Futterbehälter (1) hineinragender Futterabwurfschacht (12) vorgesehen ist.

22. Fütterungsvorrichtung nach Anspruch 1 bis 21, dadurch gekennzeichnet, daß der Futterabwurfschacht (12) mit einem das Tier von ihm abhaltenden Schutzschild (23) versehen ist.

23. Fütterungsvorrichtung nach Anspruch 1 bis 22, dadurch gekennzeichnet, daß das Schutzschild (23) als ein das Tier beim Verschwenken der Futterschale (2) treffender Klopfer ausgebildet ist.

24. Fütterungsvorrichtung nach Anspruch 1 bis 23, dadurch gekennzeichnet, daß die Futterschale (2) einen Boden aufweist, der im verschwenkten Zustand eine abwärts auf einen sich unterhalb der Futterschale (2) erstreckenden Stallboden gerichtete schiefe Ebene bildet.

25. Fütterungsvorrichtung nach Anspruch 1 bis 24, dadurch gekennzeichnet, daß in dem Futterabwurfschacht (12) eine diesen verschließenden Futterabsperrklappe (22) angeordnet ist.

26. Fütterungsvorrichtung nach Anspruch 1 bis 25, dadurch gekennzeichnet, daß die Verbinder mit Umhüllungen umkleidet sind.

27. Fütterungsvorrichtung nach Anspruch 1 bis 26, dadurch gekennzeichnet, daß mindestens einer der mit der Schwenkachse (14) verbundenen Verbinder (8) aus einem starren und einem elastischen Teil besteht und die Länge des elastischen Teils einer hohen Frequenz der pendelnden Futterschale (2) entspricht.

28. Fütterungsvorrichtung nach Anspruch 1 bis 27, dadurch gekennzeichnet, daß mindestens einer der mit der Schwenkachse (14) verbundenen Verbinder (8) aus einem starren und einem elastischen Teil besteht und die Länge des elastischen Teils einer kleinen Amplitude der pendelnden Futterschale (2) entspricht.

29. Fütterungsvorrichtung nach Anspruch 1 bis 28, dadurch gekennzeichnet, daß der Futterbehälter (1) auf einer Schienenbahn (3) verschieblich gelagert ist.

30. Fütterungsvorrichtung nach Anspruch 1 bis 29, dadurch gekennzeichnet, daß die Schienenbahn (3) sich oberhalb der Tiere in einem vor deren Köpfen (19) liegenden Bereich erstreckt.

31. Fütterungsvorrichtung nach Anspruch 1 bis 30, dadurch gekennzeichnet, daß auf der Schienenbahn (3) eine Verfahrvorrichtung (4) gelagert ist, mit der der Futterbehälter (1) gekoppelt ist.

32. Fütterungsvorrichtung nach Anspruch 1 bis 31, dadurch gekennzeichnet, daß mindestens einzelne Teile unter elektrischer Spannung stehen.

33. Fütterungsvorrichtung nach Anspruch 1 bis 32, dadurch gekennzeichnet, daß der Futterbehälter (1) unter elektrischer Spannung steht.

34. Fütterungsvorrichtung nach Anspruch 1 bis 33, dadurch gekennzeichnet, daß die Verbinder (7, 8) unter elektrischer Spannung stehen.

35. Fütterungsvorrichtung nach Anspruch 32 bis 34, dadurch gekennzeichnet, daß die Spannung als eine elektrische Dauerspannung ausgebildet ist.

36. Fütterungsvorrichtung nach Anspruch 32 bis 34, dadurch gekennzeichnet, daß die Spannung als eine zeitabhängig in ihrer Stärke alternierend gesteuerte Spannung ausgebildet ist.

0103669

Fig. 1
3
4
5
1
21
13
22
7
12
24
8
23
17
20
18
25
14
2
Fig. 2
9
24
23
18
11
2
14
20
Fig. 3
2
10
9
20
14
11

6
4
3
1
21
13
7
22
8
12
23
20
14
2

Fig. 4

6
4
3
1
21
26
13
22
23
8
7
12
11
19
15
17
14
16


Fig. 5

Europäisches Patentamt

# EUROPÄISCHER RECHERCHENBERICHT

0103669

Nummer der Anmeldung

EP 83 10 3508

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-B-2 652 884 (LOHMANN-APPARATEBAU GMBH)<br>* Ansprüche 1, 2, 6; Figuren 1, 2 * | 1,11, 13,19, 29,30 | A 01 K 5/02 |
| A | DE-A-2 516 278 (KÜNZLER & CO.)<br>* Anspruch 2; Figur 1 * | 20,21 | |
| A | DE-A-1 607 093 (R.J.A. BROWN)<br>* Anspruch 1; Seite 3; Figur * | 29 | |
| A | DE-A-1 607 060 (R. BADEWIEN)<br>* Anspruch 1; Seite 2 - Seite 3, Absatz 1 * | 32,36 | |
| | ----- | | RECHERCHIERTE SACHGEBIETE (Int. Cl. 3) |
| | | | A 01 K 5/00 |

Der vorliegende Recherchenbericht wurde für alle Patentansprüche erstellt.

| Recherchenort | Abschlußdatum der Recherche | Prüfer |
|---|---|---|
| BERLIN | 10-11-1983 | LEITHAEUSER R |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82